# EUROPÄISCHE PATENTSCHRIFT

(11) **EP 1 474 630 B1**
(45) Veröffentlichungstag und Bekanntmachung des Hinweises auf die Patenterteilung: **25.06.2008**
(21) Anmeldenummer: 03739377.4
(22) Anmeldetag: 14.01.2003
(51) Int. Cl.: F16M 11/04

(54) **TRÄGER ZUM TRAGEN VON ZUMINDEST EINEM ANZEIGEAPPARAT**
MOUNT FOR CARRYING AT LEAST ONE DISPLAY DEVICE
SUPPORT POUR PORTER AU MOINS UN DISPOSITIF D'AFFICHAGE

(30) Priorität: 13.02.2002 DE 10205869
(43) Veröffentlichungstag der Anmeldung: 10.11.2004
(73) Patentinhaber: Mavig GmbH, 81829 München (DE)
(72) Erfinder: KUHN, Peter, 81545 München (DE)
(74) Vertreter: Körfer, Thomas
(86) Internationale Anmeldenummer: PCT/EP2003/000310
(87) Internationale Veröffentlichungsnummer: WO 2003/069215

(56) Entgegenhaltungen:
- WO-A-01/45627
- WO-A-03/000091
- DE-A- 4 003 992
- DE-U- 20 015 398
- US-A- 3 911 221
- US-A- 4 397 439
- US-A- 4 953 821
- US-A- 5 108 063
- US-A- 5 597 147
- US-B1- 6 343 006
- PATENT ABSTRACTS OF JAPAN vol. 2000, no. 07, 29. September 2000 (2000-09-29) -& JP 2000 112375 A (OKAMURA CORP), 21. April 2000 (2000-04-21)
- PATENT ABSTRACTS OF JAPAN vol. 2000, no. 09, 13. Oktober 2000 (2000-10-13) -& JP 2000 184311 A (HITACHI LTD;HITACHI VIDEO & INF SYST INC), 30. Juni 2000 (2000-06-30)

## Beschreibung

Die Erfindung bezieht sich auf einen Träger zum Tragen zumindest eines Anzeigeapparats, insbesondere eines Flachbildschirmgeräts, gemäß dem Oberbegriff des Anspruchs 1.

Ein in der nicht vorveröffentlichten DE 100 43 895 A1 beschriebener Träger ist dazu eingerichtet, mehrere, in einer horizontalen Reihe angeordnete Bildschirmgeräte in einem Raum zu positionieren, wobei der Träger durch ein Gelenk mit einer horizontalen Schwenkachse an einer Tragvorrichtung aufgehängt ist, die an der Decke eines Raumes befestigt ist. Zum Tragen der in der horizontalen Reihe angeordneten Bildschirmgeräte dient ein sich horizontal erstreckender Tragarm, der mittig auf dem unteren Tragarmabschnitt eines C-förmigen ersten Tragarms befestigt ist, dessen oberer Tragarmabschnitt mit dem Gelenk verbunden ist. Die ausgeprägte C-Form des ersten Tragarms ermöglicht es, ein herkömmliches Bildschirmgerät mit einem großen Rückbau im Bereich des ersten Tragarms anzuordnen. Aufgrund der Anordnung mehrerer Bildschirmgeräte in einer Querreihe bedarf es einer relativ zueinander verdrehten Anordnung der Bildschirmgeräte, um sie bezüglich eines gemeinsamen Sichtpunktes, z. B. ein Operationstisch, gut sehen zu können und die Darstellungen der Bildschirme möglichst ohne Parallaxe und Bildverzerrungen sehen zu können. Hierdurch sind ein beträchtlicher Aufwand hinsichtlich Arbeitsaufwand und Arbeitszeit sowie beträchtliche Bau- und Montagekosten vorgegeben, da besondere Einstellvorrichtungen zwischen den Bildschirmgeräten und dem zweiten Tragarm vorgesehen werden müssen, um die besonderen Einstellungen der Bildschirmgeräte durchführen zu können.

In der US 6,343,006 B1 ist ein Träger der eingangs angegebenen Art in Form eines Standgerätes beschrieben, mit einem horizontalen Tragarm zum Tragen von Anzeigeapparaten an seiner Vorderseite, wobei der horizontale Tragarm an seiner Rückseite an der Vorderseite eines vertikalen Tragarms befestigt ist. Der horizontale Tragarm ist zu seinem freien Enden hin bezüglich seiner ebenen Vorderseite durch vertikale Schrägflächen an seiner Rückseite verjüngt. An der Vorderseite des horizontalen Tragarms sind in den Endbereichen nach vorne abstehende Verbindungselemente angeordnet, mit denen jeweils ein Bildschirm durch ein Kugelgelenk verbunden ist. Beim Vorhandensein von zwei nebeneinander angeordneten Bildschirmen können diese in den Kugelgelenken so eingestellt werden, daß sie auf einen gemeinsamen Sichtpunkt gerichtet sind.

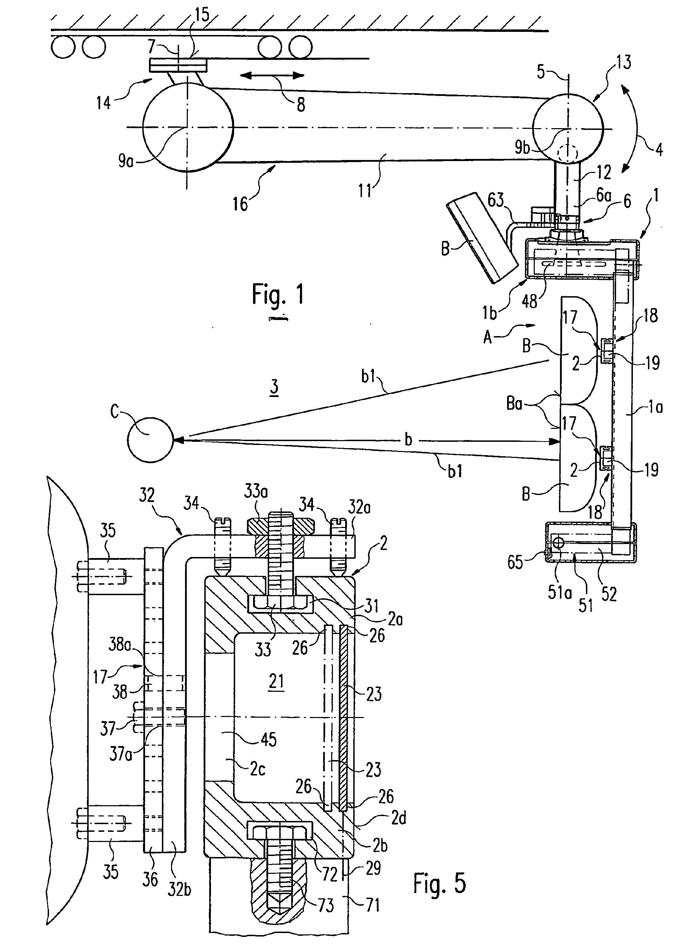

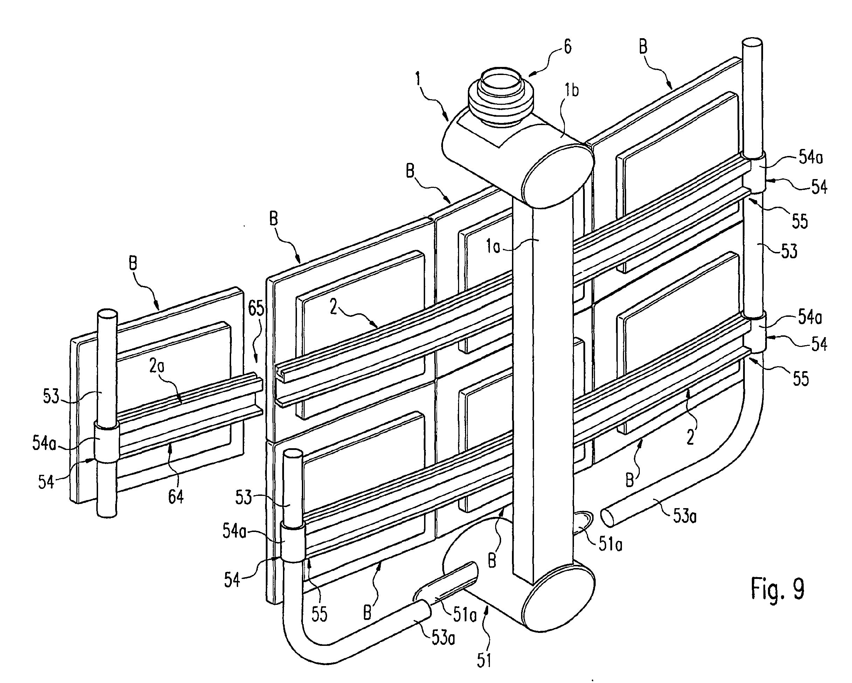

In der US 3,911,221 A ist ein Tragsystem für Lautsprecher beschrieben, mit einem horizontalen Tragarm, der - in der Draufsicht gesehen - U-förmig geformt ist (Fig. 1) oder sich kreisbogenförmig erstreckt (Fig. 9), wobei an seiner konkaven Seite Verbindungselemente für jeweils einen Lautsprecher angeordnet sind, die in einer an der konkaven Seite angeordneten Nut verschiebbar gelagert sind. Einzelheiten zur Positionierung des Tragarms im Raum sind nicht beschrieben.

Der Erfindung liegt die Aufgabe zugrunde, einen Träger der eingangs angegebenen Art hinsichtlich einer günstigen Raumpositionierung des Anordnungsplatzes für den wenigstens einen Anzeigeapparat zu verbessern.

Diese Aufgabe wird durch die Merkmale des Anspruchs 1 gelöst. Vorteilhafte Weiterbildungen der Erfindung sind in zugehörigen Unteransprüchen beschrieben.

Bei der erfindungsgemäßen Ausgestaltung nach Anspruch 1 ist der wenigstens einen horizontalen Tragarm zu seiner dem Tragarmabschnitt abgewandten Längsseite hin gekrümmt und zwar vorzugsweise so gekrümmt, daß die im Bereich des jeweiligen Anordnungsplatzes angeordneten Tragarmabschnitte sich etwa rechtwinklig zu einer Vertikalebene erstrecken, in der die Sichtachse des jeweiligen Apparates verläuft. Außerdem ist das Verbindungsteil in einer im horizontalen Tragarm verlaufenden hinterschnittenen Nut verschiebbar gehalten, und die Nut ist an der Oberseite des horizontalen Tragarms angeordnet. Bei der erfindungsgemäßen Ausgestaltung ist die Sicht auf den oder die Anzeigeapparate optimal, weil sie in der jeweiligen Sichtachse liegt und deshalb z. B. aufgrund von Parallaxe gegebene Bildverzerrungen vermieden oder wenigstens vermindert sind.

Die erfindungsgemäße Ausgestaltung ermöglicht an den Anordnungsplätzen z. B. vorfertigbare tragarmseitige formschlüssig wirksame Positionier- und Verbindungselemente, die den oder die Anzeigeapparate jeweils in einer richtigen Stellung positionieren. Dabei befindet sich der jeweils montierte Anzeigeapparat aufgrund der konkaven Formung des zweiten Tragarms im wesentlichen in der jeweiligen Sichtachse, ohne daß es einer besonderen Ausrichtung des Anzeigeapparates bedarf, wie es beim Stand der Technik der Fall ist. Da sich bei einem gekrümmten zweiten Tragarm jede Stelle für einen Anordnungsplatz eignet, ist es möglich, diese in Stufen oder stufenlos zu verstellen

Bei einem vorliegenden Träger sind der Verlauf und die Verlegung der sich zu dem wenigstens einen Anzeigeapparat erstreckenden elektrischen Leitungen problematisch und zwar sowohl bezüglich ihrer Anordnung als auch ihrer Montage und Zugänglichkeit.

Weiterbildungen der Erfindung beziehen sich daruf, einen Träger der eingangs angegebenen Art bezüglich des Verlaufs der elektrischen Leitungen zu verbessern. Dies gilt für den etwa vertikalen Tragarmabschnitt und/oder für den sich dazu quer erstreckenden zweiten Tragarm. Insbesondere ist eine Verbesserung der Anordnung und Montage angestrebt. Des weiteren ist angestrebt, die Zugänglichkeit und nachträgliche Inspektion der Kabel zu verbessern.

Der etwa vertikale Tragarmabschnitt und/oder der sich dazu quer erstreckende zweite Tragarm kann jeweils durch ein U-Profil gebildet sein, dessen Freiraum einen Kabelkanal bildet und durch einen Abdeckstreifen geschlossen ist, der lösbar an einem oder an beiden Schenkeln des U-Profils gehalten ist. Hierdurch ist eine einfache Bauweise vorgegeben, weil kein besonderer Kanal geschaffen werden muß, sondern der als U-Profil ausgebildete Tragarm als Kabelkanal ausgenutzt wird. Aufgrund der vorhandenen dreiseitigen Abdeckung des Kabelkanals bedarf es lediglich einer Abdeckung der vierten Seite, was in einfacher Weise durch einen Abdeckstreifen erfolgt, der lösbar an einem der beiden Schenkel des U-Profils gehalten ist. Auch hierdurch ist eine einfache und kostengünstig herstellbare Bauweise gegeben, die sich aufgrund der Profilform und Lösbarkeit des Abdeckstreifens einfach und kostengünstig herstellen läßt oder auch mit elektrischen Leitungen nachrüsten läßt bzw. deren Kontrolle ermöglicht.

Für eine hinreichende Abdeckung des bzw. der Kabelkanäle bedarf es einer Halterung des Abdeckstreifens an einem oder an beiden Schenkeln des U-Profils. Als Positioniermittel für den Abdeckstreifen eignet sich eine Längsnut, vorzugsweise an der Innenseite eines oder beider Schenkel des U-Profils, wobei der Abdeckstreifen längs in die wenigstens eine Nut einschiebbar ist. Zur Positionierung des Abdeckstreifens in seiner Längsrichtung kann ein form- und/oder kraftschlüssig wirksames Befestigungselement am U-Profil angeordnet sein, das z. B. durch eine einen Schenkel in einem Gewindeloch durchfassende Schraube gebildet ist, die gegen den Abdeckstreifen klemmbar ist oder in ein Loch desselben einfaßt.

Die vorbeschriebene Ausgestaltung mit wenigstens einer Nut zur Positionierung der Abdeckleiste eignet sich sowohl für einen sich gerade erstreckenden Tragarm als auch für einen bogenförmig gekrümmten Tragarm. Im letzteren Fall bedarf es einer Biegsamkeit oder entsprechend gekrümmten Form des Abdeckstreifens, um ihn in die wenigstens eine Nut einschieben zu können.

Ein vorliegender Träger ist in vielen Fällen verstellbar gehalten, z. B. durch ein Gelenk an einer Tragvorrichtung, die an einer Raumdecke befestigt sein kann.

Weitere Weiterbildungen der Erfindung beziehen sich darauf, einen Träger der eingangs angegebenen Art so auszugestalten, daß ein verbessertes manuelles Ergreifen und Bewegen möglich ist.

Hierzu kann der Träger unterhalb des zweiten Tragarms ein Griffteil aufweisen, daß sich vorzugsweise vom ersten Tragarmabschnitt nach vorne erstreckt.

Diese Ausgestaltung ermöglicht ein manuelles Ergreifen des Trägers zum einen von der Vorderseite her und zum anderen in seinem zentralen Bereich, so daß er handhabungsfreundlich bewegbar ist. Das Griffteil ist vorzugsweise im Sinne einer Zweihandbedienung ausgebildet und kann zwei Griffe in einem horizontalen Abstand voneinander für eine Zweihandbedienung aufweisen. Bei einer bevorzugten Ausgestaltung sind die beiden Griffe durch zwei sich z. B. horizontal und gerade erstreckende Griffstangen gebildet, die auf beiden Seiten von einem stangenförmigen Griffträger abstehen, der sich vom ersten Tragarmabschnitt nach vorne erstreckt und vorzugsweise den zweiten Tragarm nach vorne überragt.

In solchen Fällen, in denen eine Tragvorrichtung für den Träger wenigstens eine Bremse zum Feststellen eines Freiheitsgrades der Tragvorrichtung aufweist, ist es vorteilhaft, im Bereich des wenigstens einen Griffteils wenigstens einen Schalter zum Abschalten und Einschalten wenigstens einer Bremse vorzusehen ist. Hierdurch ist ein handhabungsfreundliches Aus- und Einschalten der Bremse möglich.

Weiters sind Merkmale zur vorzugsweise einstellbaren Befestigung des wenigstens einen Anzeigeapparates und/oder wenigstens eines zusätzlichen Anzeigeapparates und/oder von Schutzstangen zum Schutz des wenigstens einen Anzeigeapparates beschrieben. Diese weiteren Merkmale führen auch zu einer einfachen, kompakten und stabilen Bauweise mit einer geringen Abmessung zwischen der Vorderseite und Rückseite des Trägers.

Nachfolgend werden vorteilhafte Ausgestaltungen der Erfindung anhand mehrerer Ausführungsbeispiele näher erläutert. In der Zeichnung zeigen:
- Fig. 1: einen erfindungsgemäßen Träger in der Seitenansicht, wobei er an einer Deckentragvorrichtung aufgehängt ist;

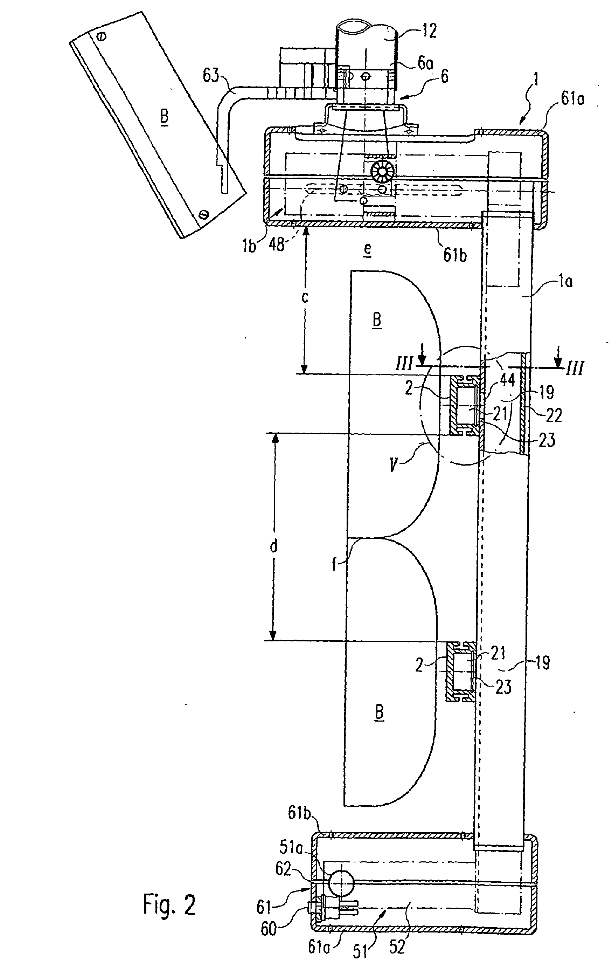

- Fig. 2: den Träger in vergrößerter Seitenansicht;
- Fig. 3: den Teilschnitt III-III in Fig. 2 mit einem zweiten Tragarm in der Draufsicht;
- Fig. 4: einen zweiten Tragarm in der Rückansicht;
- Fig. 5: die in Fig. 2 mit V gekennzeichnete Einzelheit in vergrößerter Schnittdarstellung;

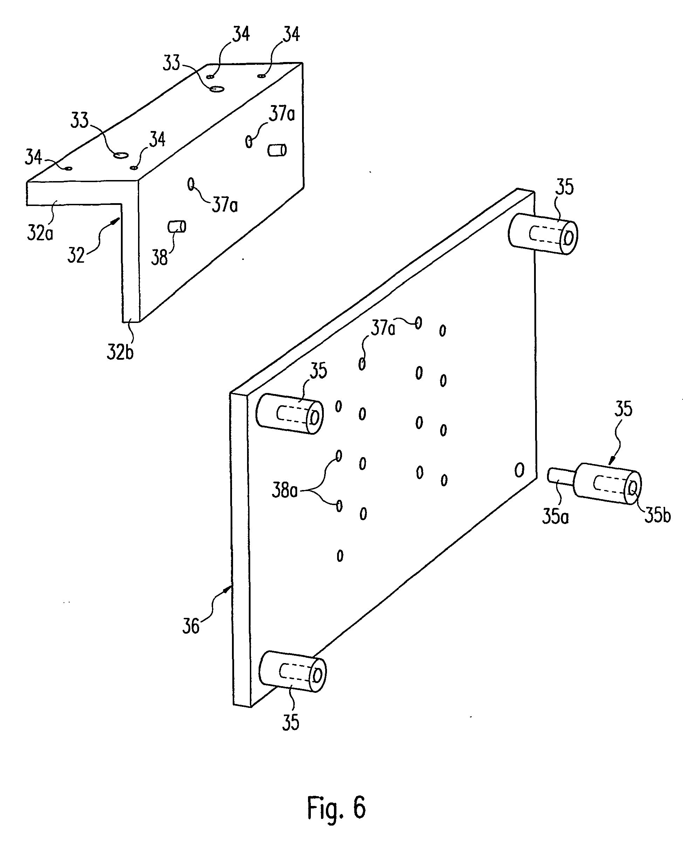

- Fig. 6: Einzelteile einer Adaptionsvorrichtung gemäß Fig. 5;

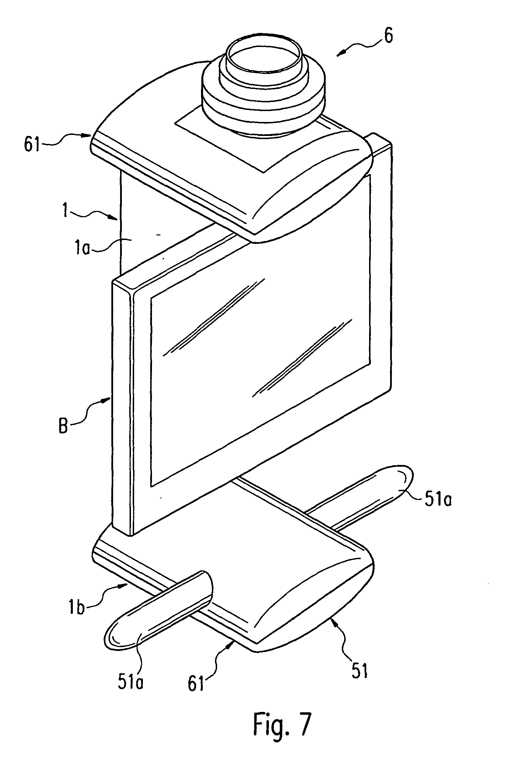

- Fig. 7: ein Ausführungsbeispiel des Trägers mit einem Bildschirmgerät in perspektivischer Darstellung;

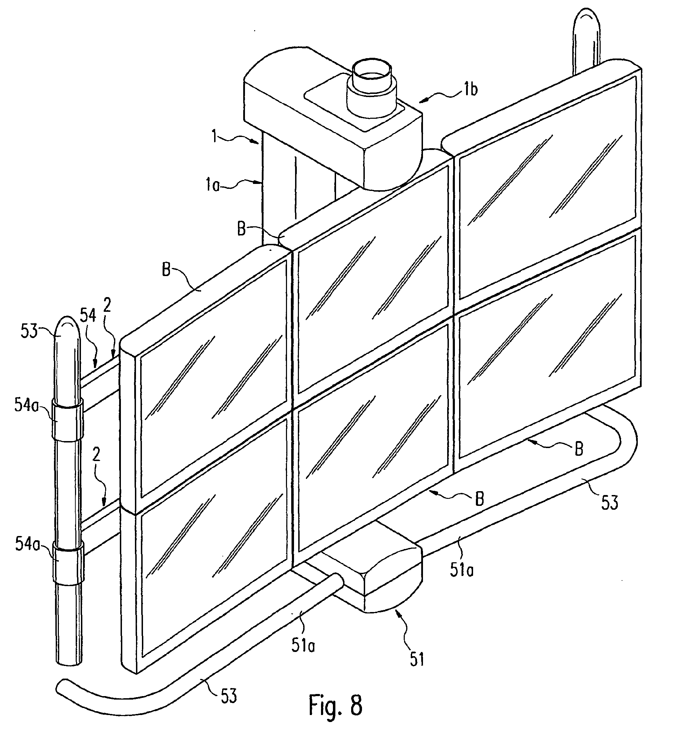

- Fig. 8: ein Ausführungsbeispiel des Trägers mit mehreren übereinander und/oder nebeneinander angeordneten Bildschirmgeräten in perspektivischer Darstellung;
- Fig. 9: den Träger nach Fig. 8 in perspektivischer Rückansicht in abgewandelter Ausgestaltung.

Der in seiner Gesamtheit mit A bezeichnete Träger ist zum Tragen von zumindest einem Anzeigeapparat B, insbesondere zum Tragen von zumindest einem Flachbildschirmgerät, mit dem Zweck eingerichtet, den oder die Anzeigeapparate B bezüglich einem im vorhandenen Raum 3 angeordneten Sichtpunkt C gut sichtbar zu positionieren, so daß ein oder mehrere im Bereich des Sichtpunktes C befindliche Personen den wenigstens einen Apparat B gut sehen können.

Beim Ausführungsbeispiel ist der Träger A gemäß dem Doppelpfeil 4 höhenverstellbar und/oder um eine erste vertikale Drehachse 5 in einem Drehgelenk 6 frei drehbar und/oder um eine zweite Vertikale und einen horizontalen Abstand von der ersten Drehachse 5 angeordnete zweite vertikale Drehachse 7 schwenkbar und/oder gemäß Doppelpfeil 8 in einer horizontalen Richtung hin und her so verstellbar, daß der Abstand b vom Sichtpunkt C wahlweise verringerbar oder vergrößerbar ist.

Für die Höhenverstellung dient ein um eine horizontale Schwenkachse 9a schwenkbarer Hubarm 11, an dessen freien Ende ein Halter 12 um eine in einem horizontalen Abstand von der Schwenkachse 9a angeordneten Schwenkachse 9b in einem Gelenk 13 schwenkbar gelagert ist. Der vorzugsweise gewichtsausgleichende Hubarm 11 ist außerdem durch ein Gelenk 14 um die zweite vertikale Drehachse 7 drehbar mit einem Schieber 15 verbunden, der längs dem Doppelpfeil 10 in einer Führung hin und her verschiebbar ist, z. B. in einer Rollenführung. Beim Ausführungsbeispiel ist die in ihrer Gesamtheit mit 16 bezeichnete Tragvorrichtung 16 an der Decke des vorhandenen Raumes 3 befestigt. Sie kann jedoch auch anders abgestützt sein, z. B. an einer Seitenwand des Raumes 3.

Der Träger A ist einen winkelförmigen Tragarm 1 mit einem sich im wesentlichen vertikal erstreckenden hinteren Tragarmabschnitt 1a und einem oberen Tragarmabschnitt 1b winkelförmig geformt, wobei der obere Tragarmabschnitt 1b sich zur dem Sichtpunkt C zugewandten Vorderseite des Trägers 1 hin erstreckt. Zwischen dem oberen Tragarmabschnitt 1b und dem beim Ausführungsbeispiel pendelförmigen Halter 12 ist das Drehgelenk 6 angeordnet. Die vertikale Drehachse 5 verläuft im mittleren Bereich des oberen Tragarmabschnitts 1b. Der wenigstens eine Anzeigeapparat B ist mit seiner Rückseite durch eine lösbare Verbindungsvorrichtung 17 mit einem sich etwa horizontal erstreckenden zweiten Tragarm 2 lösbar befestigt, der durch eine vorzugsweise ebenfalls lösbare Verbindungsvorrichtung 18 mit der Vorderseite des Tragarmabschnitts 1a verbunden ist. Der Tragarmabschnitt 1a und der zweite Tragarm 2 sind jeweils durch ein U-Profil gebildet, dessen Hohlraum einen Kabelkanal 19, 21 bildet, der zur Rückseite hin offen ist und durch einen lösbar verbundenen Abdeckstreifen 22, 23 verschlossen ist.

Der zweite Tragarm 2 ist zur Vorderseite hin konvex geformt, vorzugsweise gekrümmt, insbesondere kreisbogenabschnittförmig gekrümmt. Der sich quer zur vertikalen Tragarmebene E erstreckende Tragarm 2 ist vorzugsweise bezüglich der Tragarmebene E symmetrisch angeordnet und so lang ausgebildet, daß mehrere horizontal nebeneinander angeordnete Anordnungsplätze 24 für jeweils einen Anzeigeapparat B angeordnet sind. Die konvexe Form oder Krümmung ist so ausgebildet, daß der sich am jeweiligen Anordnungsplatz 24 befindliche Tragarmabschnitt etwa rechtwinklig zu einer sich zwischen dem Sichtpunkt C und dem Anordnungsplatz 24 gerade erstreckenden Sichtlinie b1 angeordnet ist, die sich etwa horizontal erstrecken kann oder zum Sichtpunkt C geneigt sein kann. Wenn mehrere, z. B. zwei, übereinander angeordnete Anzeigeapparate B gewünscht sind, kann der Träger A wenigstens zwei im vorbeschriebenen Sinne übereinander angeordnete und ausgebildete Tragarme 2 aufweisen. Die Verbindungsvorrichtung 17 ist vorzugsweise höheneinstellbar, so daß der zugehörige Anzeigeapparat B entsprechend höheneinstellbar mit dem Tragarm 2 verbunden ist. Der vertikale Abstand c zwischen dem oberen Tragarmabschnitt 1b und dem oberen Tragarm 2 ist so groß bemessen, daß zwischen dem Anzeigeapparat B und dem Tragarmabschnitt 1b ein Sicherheitsabstand e vorhanden ist. Dies gilt vorzugsweise auch für einen vertikalen Abstand f zwischen zwei übereinander angeordneten Anzeigeapparaten B, wobei der Abstand d der übereinander angeordneten Tragarme 2 entsprechend groß zu bemessen ist.

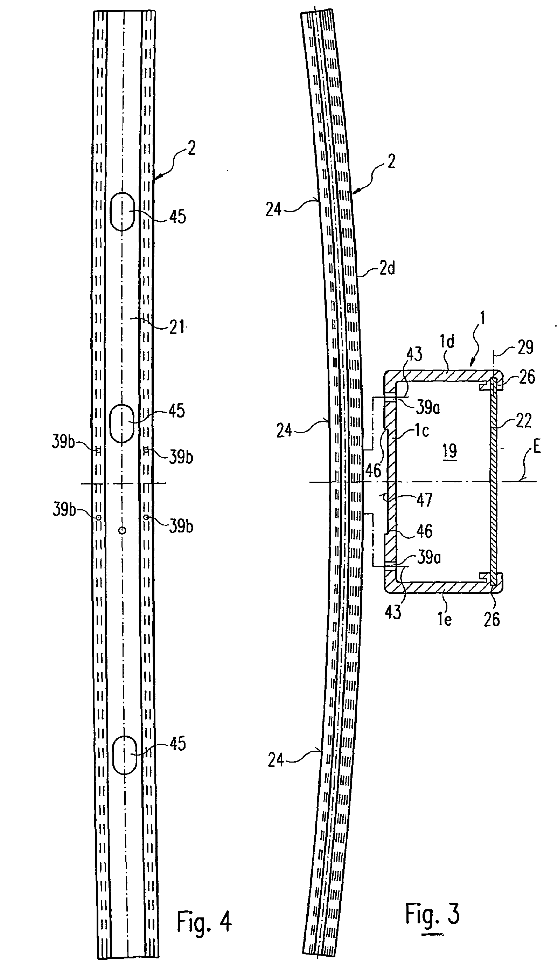

Wie insbesondere aus den Fig. 3 und 5 ersichtlich ist, sind die Abdeckstreifen 22, 23 jeweils in einer Nut 26 längs einschiebbar gehalten, die im Randbereich der einander gegenüberliegenden Schenkel 1d, 1e, 2a, 2b des betreffenden U-Profils angeordnet sind. Um die Abdeckstreifen 22, 23 gegen eine ungewollte Verschiebung zu positionieren, kann ein gegen den betreffenden Abdeckstreifen 22, 23 wirksames Positionierelement in einem der Schenkel vorgesehen sein, z. B. eine den Schenkel in einem Gewindeloch durchfassende Gewindeschraube, die andeutungsweise dargestellt und mit 29 bezeichnet ist.

Die Verbindungsvorrichtung 17 ist vorzugsweise so ausgebildet, daß der Anzeigeapparat B stufenlos oder in Stufen quer zur Tragarmebene E bzw. längs des Tragarms 2 verstellbar ist und/oder in Stufen oder stufenlos höheneinstellbar ist und/oder etwa horizontal in der Tragarmebene E in Stufen oder stufenlos verstellbar ist und/oder an Anzeigeapparate B mit unterschiedlichen Befestigungselementen adaptierbar ist. Beim Ausführungsbeispiel weist die Verbindungsvorrichtung 17 eine im Tragarm 2 längs verlaufende hinterschnittene Befestigungsnut 31, insbesondere eine T-Nut, auf, die vorzugsweise im oberen Schenkel 2a angeordnet und nach oben offen ist. Außerdem weist die Verbindungsvorrichtung 17 einen profilförmigen Basiswinkel 32 auf, dessen horizontaler Schenkel 32a den Tragarm 2 übergreift und den eine Schraube 33 in einem Loch durchsetzt, deren Kopf in der Hinterschneidung der Befestigungsnut 31 verschiebbar und durch Anziehen der Schraube 33 mittels einer Mutter 33a klemmbar ist.

Zur Feinjustierung des Basiswinkels 31 bzw. des Anzeigepparates B können drei oder vier um die Schraube 33 verteilt angeordnete Einstellschrauben 34 angeordnet sein, die den Schenkel 32a in einem Gewindeloch durchsetzen. Durch ein mehr oder weniger weites Einschrauben der Einstellschrauben 34 gegen den Tragarm 2 läßt sich der Basiswinkel 31 bezüglich geringfügigen allseitigen Neigungsstellungen positionieren.

Zur bereits erwähnten Einstellung des Anzeigeapparates B längs der Sichtlinie b1 kann die Verbindungsvorrichtung 17 ein oder mehrere verteilt angeordnete Abstandsstücke 35 unterschiedlicher Länge aufweisen, die jeweils zwischen zwei Verbindungsteilen der Verbindungsvorrichtung 17 montierbar sind, z. B. zwischen dem Anzeigeapparat B und dem etwa vertikalen Schenkel 32b des Basiswinkels 32 oder einer Adaptionsplatte 36, die dazwischen angeordnet ist und mit den Abstandstücken 35 und dem Schenkel 32b verbindbar ist. Die vorerwähnte Höheneinstellvorrichtung kann dadurch gebildet sein, daß im Schenkel 32b und/oder in der Adaptionsplatte 36 Durchführungslöcher 37a in wenigstens einer oder zwei vertikalen Reihen sind, in die zwecks vertikaler Stufeneinstellung nur in Fig. 5 dargestellte Befestigungsschrauben 37 einführbar sind. Zur Stabilisierung können Schraubendurchführungslöcher 37a und Stiftdurchführungslöcher 38a vorgesehen sein, wobei beide Teile durchfassende und z. B. in einem dieser Teile festsitzende Stifte 38 in unterschiedlichen Höhenlagen einführbar sind.

Die Abstandsstücke 35 können z. B. an einem Ende verjüngte Schraubenbolzen 35a und am anderen Ende Schraubenlöcher 35b aufweisen.

Die Verbindungsvorrichtung 18 kann eine Schraubverbindung sein mit Durchführungslöchern 39a im Steg 1c des Tragarmabschnitts 1a und Gewindelöchern 39b in den Schenkeln 2a, 2b des Tragarms 2, in die andeutungsweise dargestellte Befestigungsschrauben 43 einfassen. In Fig. 3 ist der Tragarmabschnitt 1a aus Gründen der Klarheit vom Tragarm 2 beabstandet und vergrößert dargestellt.

Für den Durchgang der nicht dargestellten Kabel zwischen den Kabelkanälen 19, 21 sind im Steg 1c des vertikalen Tragarmabschnitts 1a jeweils in Höhe des zweiten Tragarms 2 je nach Anzahl der übereinander angeordneten Tragarme 2 ein oder mehrere Durchführungslöcher 44 für die Kabel angeordnet. Im Steg 2c des oder der Tragarme 2 ist bzw. sind zur Durchführung der Kabel zu den Apparaten 8 Durchführungslöcher 45 im Bereich des oder der Anordnungsplätze 24 des oder der Anzeigeapparate B angeordnet.

Um eine stabile Anlage der gekrümmten Rückseite 2d des Tragarms 2 an der Vorderseite des Tragarmabschnitts 1a zu gewährleisten, weist der Tragarmabschnitt 1a zwei vertikale und einen horizontalen Abstand voneinander aufweisende Anlagekanten 46 auf, die durch eine vertikale Nut 47 in der Vorderseite des Tragarmabschnitts 1b gebildet sein können. Die Tiefe und/oder Breite der Nut 47 ist vorzugsweise so bemessen, daß die gekrümmte Rückseite 2d nicht nur an den Anlagekanten 46 sondern vorzugsweise auch der Grundfläche der Nut 47 anliegt.

Um eine horizontale Verschiebung des Schwerpunktes S des Trägers 1 bezüglich dem Gelenk 6 zu ermöglichen, ist das halterseitige Gelenkteil 6a bezüglich dem oberen Tragarmabschnitt 1b in dessen Längsrichtung horizontal verstellbar. Hierzu kann z. B. eine horizontale Verstellnut 48 dienen, die vorzugsweise im Tragarmabschnitt 1b angeordnet ist und in die das Gelenkteil 6a mit einem vorzugsweise horizontal länglich ausgebildeten Eingriffselement einfaßt. Eine solche Einstellvorrichtung ist Gegenstand der DE 100 43 895 A1.

Zum manuellen Bewegen des Trägers 1 an oder mit der Tragvorrichtung 16 ist ein Griffteil 51 vorgesehen, daß am unteren Ende des Tragarmabschnitts 1a angeordnet ist oder vom unteren Ende nach vorne vorragt, vorzugsweise so weit vorragt, daß es sich unter der Vorderseite des wenigstens einen Anzeigeapparates B befindet. Beim Ausführungsbeispiel erstreckt sich vom Tragarmabschnitt 1a eine Griffstange 52 nach vorne, in deren vorderen Endbereich an einer oder an beiden Seiten jeweils ein Handgriff 51a absteht, an den bzw. an denen der Träger 1 einhändig oder beidhändig handhabungsfreundlich in der Aufhängung bewegt werden kann, z. B. um den wenigstens einen Apparat B auf den Sichtpunkt C auszurichten.

Um den oder die Apparate B an ihren Rändern zu schützen, z. B. vor Stößen beim Bewegen, kann der Träger 1 sich wenigstens an den seitlichen Rändern erstreckende Stoßstangen 53 aufweisen, die von der oder den zweiten Tragarmen 2 getragen und mit diesen verbunden sein können.

Beim Ausführungsbeispiel sind die Stoßstangen 53 durch Rohre gebildet, die jeweils an wenigstens einem Stoßstangenhalter 54 gehalten sind, der jeweils am zugehörigen Ende des Tragarms 2 befestigt sein kann, z. B. durch eine

Steckverbindung 55, und mit diesem verbunden sein kann. Beim Ausführungsbeispiel weist der Stoßstangenhalter 54 aufrecht angeordnete Rohrstücke 54a auf, in die die zugehörige Stoßstange 54 mit Bewegungsspiel einschiebbar und durch ein Arretiermittel, z. B. eine quer in das zugehörige Rohrstück 54a eingeschraubte Klemmschraube, arretierbar ist. Die Stoßstangen 53 können mit sich am unteren und/oder oberen Rand erstreckenden Winkelverlängerungen 53a auch zum Schutz des unteren und/oder oberen Randes dienen. Bei den Ausführungsbeispielen sind die Handgriffe 51a in der Nähe des unteren Randes oder der unteren Ränder des wenigstens einen Apparates B in einem solchen Abstand davon angeordnet, daß sie handhabungsfreundlich ergriffen werden können und zugleich Stoßstangen für diesen unteren Rand bilden können. Wenn mehrere Apparate B nebeneinander angeordnet sind, können die Handgriffe 51a entsprechend der Länge des sich insgesamt ergebenden Randes verlängert sein. Dabei können diese Stoßstangen 53 entsprechend der konvergenten Form der Vorderseiten der Apparate B konvergent geformt oder gekrümmt sein. Beim Ausführungsbeispiel nach Fig. 9 sind die freien Endbereiche dieser Stoßstangen nach hinten abgewinkelt oder abgebogen.

Der obere Tragarmabschnitt 1b und/oder das Griffteil 51 bzw. die Griffstange 52 und/oder der hintere Tragarmabschnitt 1a können durch halbschalenförmige Verkleidungsteile 61a, 61b verkleidet sein, die bezüglich des oberen Tragarmabschnitts 1b und des Griffteils 51 an horizontalen oder vertikalen (nicht dargestellt) Teilungsfugen 62 aneinander liegen.

Der Träger 1 kann zusätzliche Tragarme 63, 64 für zusätzliche Anzeigeapparate B aufweisen, von denen beim Ausführungsbeispiel nach Fig. 1 ein Tragarm 63 am oberen Tragarmabschnitt 1b oder am Halter 12 befestigt sein kann und z. B. das vordere Ende des oberen Tragarmabschnitts 1b winkelförmig übergreifen sowie an seinem vorderen bzw. unteren Ende einen zusätzlichen Anzeigeapparat B vorzugsweise in nach vorne gekippter Stellung tragen kann. Beim Ausführungsbeispiel nach Fig. 9 ist ein zusätzlicher Anzeigeapparat B in vorbeschriebener Weise an einem Verlängerungsstück 2a eines Tragarms 2, hier des oberen Tragarms 2, gehalten. Das Verlängerungsstück 2a kann z. B. durch eine in der Längsrichtung des Tragarms 2 zusammensteckbare Steckverbindung 65 mit dem Tragarm 2 verbunden sein. Der seitliche Rand des zusätzlichen Apparats B kann in vorbeschriebener Weise durch eine mit dem Verlängerungsstück 2a verbundenen Stoßstange 53 ebenfalls geschützt sein. Das oder die die Stoßstange 53 oder den Stoßstangenhalter 54 jeweils mit dem Tragarm 2 verbindende Verbindungsteil ist bezüglich den Nuten für den Abdeckstreifen 23 soweit nach vorne so versetzt angeordnet, daß die Nuten seitlich offen sind und der Abdeckstreifen 23 hinter dem jeweiligen Verbindungsteil in die Nuten einschiebbar und aus diesen wieder herausziehbar ist.

Um die Tragvorrichtung 16 jeweils in ihrer eingestellten Position zu stabilisieren, ist es vorteilhaft, wenigstens einer Bewegung bzw. einem Freiheitsgrad eine nicht dargestellte Bremse zuzuordnen. Beim Ausführungsbeispiel kann eine solche Bremse dem Drehgelenk 14 und/oder dem Schieber 15 zugeordnet sein. Um eine solche Bremse für ein manuelles Bewegen des Träger 1 durch manuellen Eingriff am Griffteil 51 handhabungsfreundlich aus- und einzuschalten, ist im Bereich des Handgriffs 51 ein Schaltelement 65 angeordnet, z. B. in die Verkleidung 61 integriert, bei dessen manueller Betätigung die Bremse aus- und einschaltbar ist. Das Betätigungselement 65 ist vorzugsweise in einem solchen Abstand von einem der Handgriffe 51a angeordnet, daß es beim Ergreifen mit einem Finger der Bedienungshand handhabungsfreundlich betätigbar ist. Die zugehörige elektrische Schaltung zur Steuerung der Bremse kann so ausgebildet sein, daß beim Betätigen des Schaltelements 65 die Bremse ausgeschaltet wird und bei der Beendigung der Betätigung des Schaltelements 65 wieder eingeschaltet wird. Für zwei vorhandene Bremsen können zwei Schaltelemente 65 in entsprechender Weise im Bereich des Griffteils 51 vorgesehen sein.

Es ist vorteilhaft, den Träger 1 mit dem oder den Anzeigeapparaten B so auszubilden, daß sein Schwerpunkt in der vertikalen Mittelebene E liegt. Wenn dies nicht der Fall ist, sind am Träger 1 Ausgleichsgewichte zugeordnet, die bezüglich der vertikalen Ebene E auf einer Seite am Träger 1 angebracht werden können. In dem Fall, in dem die seitlichen Stoßstangen 53 durch Rohre gebildet sind, kann ein Ausgleichsgewicht dadurch gebildet werden, daß die betreffende Stoßstange 53 wenigstens teilweise mit einem Ausgleichsgewicht gefüllt wird. Eine andere vorteilhafte Möglichkeit besteht darin, ein Ausgleichsgewicht 71 (Fig. 5) am Tragarm 2 oder an einem der Tragarme 2 zu befestigen, vorzugsweise in seiner Längsrichtung verschiebbar anzuordnen, so daß der Wirkabstand des Ausgleichgewichts 71 stufenlos einstellbar ist. Beim Ausführungsbeispiel weist der wenigstens eine Tragarm 2 eine zweite hinterschnittene Nut 72 vorzugsweise unterseitig auf, in der das Ausgleichsgewicht 71 mittels einer in die Nut 72 eingeführten Kopfschraube 73 aufgehängt und wahlweise verschiebbar ist.

Da die horizontalen Tragarme 2 eine beträchtliche Länge aufweisen können, ist es zum Verschließen des Kabelkanals 21 vorteilhaft, wenigstens zwei Nuten 26 nebeneinander anzuordnen, in denen Abdeckstreifenstücke 23 eingeschoben sind, deren Länge kürzer ist, als die Länge des zugehörigen Tragarms 2. Es können z. B. zwei oder drei Abdeckstreifenstücke 23 vorgesehen sein, deren Länge in etwa der Hälfte oder einem Drittel der Tragarmlänge beträgt und die sich im versetzt zueinander angeordneten Verschlußzustand vorzugsweise etwas überlappen.

## Patentansprüche

1. Träger (A) zum Tragen von zumindest einem Anzeigeapparat (B), insbesondere einem Flachbildschirmgerät, mit einem ersten Tragarm (1), der einen sich etwa vertikal erstreckenden Tragarmabschnitt (1a) aufweist, und mit wenigstens einem zweiten, sich etwa horizontal und quer zum Tragarmabschnitt (1a) erstreckenden zweiten Tragarm (2), der wenigstens ein Verbindungsteil zum Verbinden mit dem Anzeigeapparat (B) aufweist,
wobei der horizontale Tragarm (2) mit einer Längsseite an der ihm zugewandten Seite des vertikalen Tragarmabschnitts (1a) befestigt ist,
**dadurch gekennzeichnet,**
**daß** der horizontale Tragarm (2) zu seiner dem Tragarmabschnitt (1a) abgewandten Längsseite hin gekrümmt ist,
**daß** das Verbindungsteil in einer im horizontalen Tragarm (2) längs verlaufenden hinterschnittenen Nut (31) verschiebbar gehalten ist
und **daß** die Nut (31) an der Oberseite des horizontalen Tragarms angeordnet ist.

2. Träger nach Anspruch 1,
**dadurch gekennzeichnet,**
**daß** der vertikale Tragarmabschnitt (1a) an seiner dem horizontalen Tragarm (2) zugewandten Seite (2) zwei einen horizontalen Abstand voneinander aufweisende vertikale Anlagekanten (46) aufweist, an denen der horizontale Tragarm (2) mit seiner gekrümmten Rückseite anliegt.

3. Träger nach Anspruch 2,
**dadurch gekennzeichnet,**
**daß** die Anlagekanten (46) durch eine vertikale Nut (47) in der dem horizontalen Tragarm (2) zugewandten Seite des vertikalen Tragarmabschnitts (1a) gebildet sind.

4. Träger nach einem der vorherigen Ansprüche,
**dadurch gekennzeichnet,**
**daß** er Teil einer Tragvorrichtung (16) ist, die an einer Decke befestigbar oder an einer Wand abstützbar ist.

5. Träger nach einem der vorherigen Ansprüche,
**dadurch gekennzeichnet,**
**daß** ein Ausgleichsgewicht (71) am horizontalen Tragarm (2) in seiner Längsrichtung verschiebbar angeordnet ist.

## Claims

1. Mount (A) for carrying at least one display device (B), in particular a flat screen unit, having a first mounting arm (1), which has an approximately vertically extending mounting arm portion (1a), and having at least one second mounting arm (2) extending approximately horizontally and transversely relative to the mounting arm portion (1a), said second mounting arm having at least one connecting part for connection to the display device (B), the horizontal mounting arm (2) being mounted by a longitudinal side on the side of the vertical mounting arm portion (1a), which side is orientated towards said mounting arm (2),
**characterised in that**
the horizontal mounting arm (2) is curved towards its longitudinal side which is orientated away from the mounting arm portion (1a), **in that** the connecting part is retained displaceably in a rear-cut groove (31) extending longitudinally in the horizontal mounting arm (2),
and **in that** the groove (31) is disposed on the upper side of the horizontal mounting arm.

2. Mount according to claim 1,
**characterised in that**
the vertical mounting arm portion (1a) has on its side (2) which is orientated towards the horizontal mounting arm (2) two vertical support edges (46), which have a horizontal spacing from each other and against which the horizontal mounting arm (2) abuts with its curved rear side.

3. Mount according to claim 2,
**characterised in that**
the support edges (46) are formed by a vertical groove (47) in the side of the vertical mounting arm portion (1a) which is orientated towards the horizontal mounting arm (2).

4. Mount according to one of the preceding claims,
**characterised in that**
it is part of a mounting device (16) which can be mounted on a ceiling or can be supported on a wall.

5. Mount according to one of the preceding claims,
**characterised in that**
an equalising weight (71) is disposed on the horizontal mounting arm (2) displaceably in its longitudinal direction.

## Revendications

1. Support (A) pour porter au moins un appareil d'affichage (B), en particulier un appareil à écran plat, comprenant un premier bras porteur
(1) qui comporte un tronçon de bras porteur (1a) qui s'étend approximativement verticalement, et au moins un second bras porteur
(2) qui s'étend approximativement horizontalement et transversalement au tronçon de bras porteur (1a) et qui comporte au moins une partie de liaison pour la liaison avec l'appareil d'affichage (B),
dans lequel le bras porteur horizontal (2) est fixé par un côté longitudinal sur le côté, tourné vers lui-même, du tronçon de bras porteur vertical (1a),
**caractérisé**
**en ce que** le bras porteur horizontal (2) est incurvé vers son côté longitudinal opposé au tronçon de bras porteur (1a),
**en ce que** la partie de liaison est maintenue de façon coulissante dans une gorge (31) en contre-dépouille qui s'étend le long du bras porteur horizontal (2),
et **en ce que** la gorge (31) est ménagée sur la face supérieure du bras porteur horizontal.

2. Support selon la revendication 1,
**caractérisé en ce que** le tronçon de bras porteur vertical (1a) présente, sur son côté (2) tourné vers le bras porteur horizontal (2), deux arêtes de contact verticales (46) présentant l'une par rapport à l'autre une distance horizontale et sur lesquelles le bras porteur horizontal (2) vient en contact par sa face postérieure incurvée.

3. Support selon la revendication 2,
**caractérisé en ce que** les arêtes de contact (46) sont formées par une gorge verticale (47) dans le côté, tourné vers le bras porteur horizontal (2), du tronçon de bras porteur vertical (1a).

4. Support selon l'une des revendications précédentes,
**caractérisé en ce qu'**il fait partie d'un dispositif porteur (16) qui peut être fixé sur un plafond ou qui peut être appuyé contre un mur.

5. Support selon l'une des revendications précédentes,
**caractérisé en ce qu'**un poids de compensation (71) est agencé sur le bras porteur horizontal (2) de façon coulissante dans sa direction longitudinale.
